# EUROPEAN PATENT APPLICATION

(11) **EP 1 302 762 A1**
(43) Date of publication of application: **16.04.2003**
(21) Application number: 02022582.7
(22) Date of filing: 08.10.2002
(51) Int. Cl.: G01L 9/00

(54) **Pressure detection device**

(30) Priority: 09.10.2001 JP 2001311802
(71) Applicant: Toyoda Koki Kabushiki Kaisha, Kariya-shi, Aichi-ken (JP)
(72) Inventor: Yamakawa, Tomonari, Kariya-shi, Aichi-ken (JP)
(74) Representative: Leson, Thomas Johannes Alois, Dipl.-Ing.

(57) **Abstract**

A pressure detection device for detecting pressure of fluid that comprises a housing, a pressure-transmission medium, a sensor chip, at least one terminal pin, a sealant and a film. The pressure of the fluid is transmitted to the pressure-transmission medium such as silicone oil, and the sensor chip detects the pressure of the pressure-transmission medium. The terminal pin for the electrical connection between the sensor chip and an outside device is fixed into the housing, and a contact protrusion that is exposed in the housing for being electrically connected with the sensor chip is formed at one end of the terminal pin. The sealant such as poly-monochloro-para-xylylene is put around the contact protrusion for sealing the pressure-transmission medium. The film such as poly-monochloro-para-xylylene for avoiding the contact between the pressure-transmission medium and the sealant is coating the sealant.

## Description

### INCORPORATION BY REFERENCE

The present application claims priority under 35 U.S.C. §119 to Japanese Patent Application No. 2001-311802, filed on October 9, 2001. The contents of that application are incorporated herein by reference in their entirety.

### BACKGROUND OF THE INVENTION

### 1. Field of the Invention

This invention relates to a pressure detection device, more particularly to a semiconductor pressure detection device.

### 2. Discussion of the background

A semiconductor pressure detection device is known as a kind of devices to detect pressure of fluid. At the semiconductor pressure detection device, the pressure of the fluid received at a metal diaphragm which contacts with the fluid is transmitted to a silicon diaphragm of the semiconductor sensor chip through a pressure-transmission medium such as incompressible fluid, and the semiconductor sensor chip outputs signal corresponding to the pressure.

Generally, such a semiconductor pressure detection device has a chamber for the pressure-transmission medium, which is defined by a concave portion of a housing and the metal diaphragm that is blocking up the concave portion. The chamber is filled up with the pressure-transmission medium, and the semiconductor sensor chip is attached therein. A couple of power supply electrodes of the sensor chip is connected with terminal pins inserted into the housing via bonding wires. A detection signal electrode of the sensor chip is also connected with another terminal pin via a bonding wire. All terminal pins are unified with the housing, which is made of synthetic resin, by insert molding, and one end of each terminal pin is exposed in the chamber in order to be connected with the bonding wire. The exposed portion of each terminal pin except a portion which the bonding wire is connected with is coated by a sealant such as silicon rubber. A reason to coat the sealant is that it is difficult that the synthetic resin housing and the metal terminal pins completely adhere each other because of a difference of the materials, and it is possible that the pressure-transmission medium leaks from clearances between the housing and the terminal pins. That is, it is prevented that the pressure-transmission medium leaks from the clearances so that the sealant obstructs that the pressure-transmission medium reaches the clearance.

However, the sealant swells in a case that silicon oil is used for the pressure-transmission medium, and is deteriorated in case that fluorine oil is used for the pressure-transmission medium. The swelling or the deterioration of the sealant causes declination of the sealing ability of the sealant. More particularly, the sealant becomes porously or clearances are generated between the sealant and the housing. The pressure-transmission medium arrives to the clearances between the housing and the terminal pins through the porous or the clearances between the sealant and the housing. Therefore, it is possible that the pressure-transmission medium leaks to outside.

### SUMMARY OF THE INVENTION

In view of the foregoing, it is an object of the present invention to provide an improved pressure detection device. In order to achieve the above and other objects, the present invention provides a pressure detection device for detecting pressure of fluid that comprises a housing, a pressure-transmission medium, a sensor chip, at least one terminal pin, a sealant and a film. The pressure of the fluid is transmitted to the pressure-transmission medium such as silicone oil, and the sensor chip detects the pressure of the pressure-transmission medium. The terminal pin for the electrical connection between the sensor chip and an outside device is fixed into the housing, and a contact protrusion that is exposed in the housing for being electrically connected with the sensor chip is formed at one end of the terminal pin. The sealant such as poly-monochloro-para-xylylene is put around the contact protrusion for sealing the pressure-transmission medium. The film such as poly-monochloro-para-xylylene for avoiding the contact between the pressure-transmission medium and the sealant is coating the sealant.

Since the film coats the sealant, it is avoided that the pressure-transmission medium contacts with the sealant. Therefore, the deterioration of the sealant is significantly reduced. As a result, the leak of the pressure-transmission medium is prevented.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a cross-sectional view of a pressure detection device according to an embodiment of the present invention;
Fig. 2 is a bottom view of a connector housing of the embodiment;
Fig. 3 is a cross-sectional view enlarged a part of Fig. 1;
Fig. 4 is a cross-sectional view enlarged a part of a pressure detection device as a modification of the embodiment.

### DESCRIPTION OF THE PREFERRED EMBODIMENT

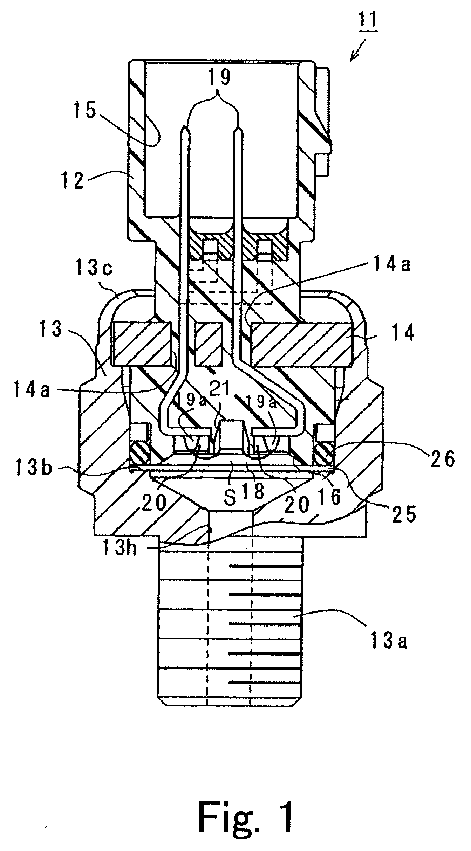

An embodiment of the present invention will be described with reference to the drawings. Fig. 1 is a cross-sectional view showing a semiconductor pressure detection device 11 according to the embodiment of the present invention. As showing in Fig. 1, the semiconductor pressure detection device 11 mainly comprises a connector housing 12 and a sensor housing 13. Hereinafter, it is defined that a side that the connector housing 12 is in (top in Fig. 1) is called "top" or "upper side" and a side that the sensor housing 13 is in (bottom in Fig. 1) is called "bottom" or "lower side" in this description.

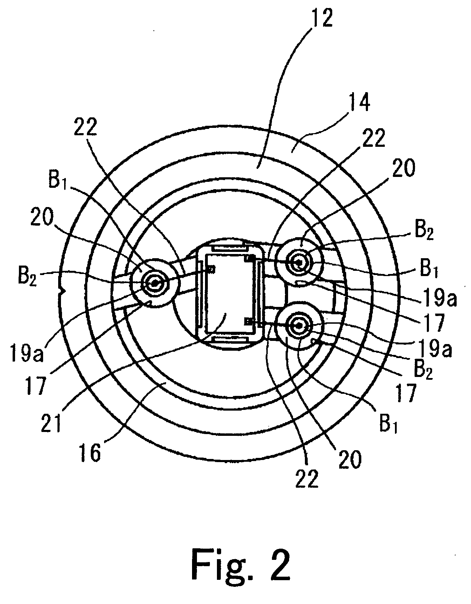

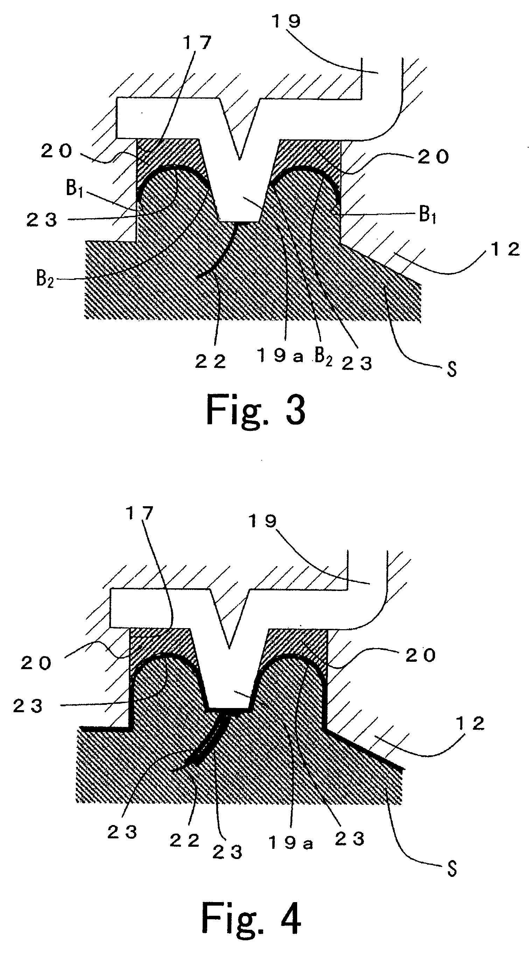

The semiconductor pressure detection device 11 mainly comprises the connector housing 12 which is made of synthetic resin and the sensor housing 13 which is made of metal. The connector housing 12 is formed as an approximate cylindrical shape wherein a diameter of an intermediate portion is smaller than the same of both ends. A housing stiffening plate 14 that is made of metal is molded at the intermediate portion of the connector housing 12. The housing stiffening plate 14 has plurality pinholes 14a which terminal pins 19 (describe later) penetrate thereinto. A concavity 15 for electric connection is formed at the top of the connector housing 12, and another concavity 16 is formed at the bottom of the connector housing 12. As showing in Fig. 2 and Fig.3, other three concavities 17 (only two are shown in Fig. 3) for sealant are formed in the concavity 16. Three terminal pins 19 (only two are shown in Fig. 1) are attached in the connector housing 12 by insert molding. A couple of the terminal pins 19 is for power supply, and another of terminal pin 19 is for detecting signal. Each terminal pin 19 is penetrating the pinhole 14a so that one end of each terminal pin 19 is projecting into the concavity 15. Another end of each terminal pin 19 is bent, and a contact protrusion 19a is formed thereon so that the contact protrusion 19a is in the concavity 17. Silicon rubber (for example dimethyl-silicon-rubber) as sealant 20 is injected into each concavity 17 so that a periphery of each contact protrusion 19a is surrounded by the sealant 20. A semiconductor sensor chip 21 that outputs electric signal corresponding to received pressure is disposed in the center of the concavity 16. The semiconductor sensor chip 21 is electrically connected to the contact protrusions 19a of the couple of terminal pins 19 via bonding wires 22 so as to be supplied power thereto, and is electrically connected to the contact protrusion 19a of the other terminal pin 19 via a bonding wire 22 so as to output detection signal therefrom.

On the other hand, the sensor housing 13 comprises a hollow portion at the upper side thereof and threaded portion 13a at the lower side thereof. A pressure introduction aperture 13h is formed in the center of the threaded portion 13a. One end of the pressure introduction aperture 13h is communicated to the hollow portion, and the fluid whose pressure would be measured is introduced to another end of the pressure introduction aperture 13h. A step as a sealing portion 13b is formed at the upper end of the pressure introduction aperture 13h, and a flexible diaphragm 25 made of metal is fluid-tightly attached with a cramping member (not shown) thereon by laser welding. The top portion of the sensor housing 13 is formed as a caulking piece 13c. The connector housing 12 and the sensor housing 13 are unified, so that the lower side of the connector housing 12 is inserted in the hollow portion of the sensor housing 13 with a O-ring 26 and the caulking piece 13c is crimped inwardly. Then the concavity 16 closed by the diaphragm 25 defines an oil chamber 18, and silicon oil S (for example dimethyl-silicon-oil) as pressure-transmission medium is filled up therein. In other words, the silicon oil S is sealed up at the bottom of the oil chamber 18 by the diaphragm 25 and O-ring 26, and is sealed up at the top of the oil chamber 18 by the sealant 20.

As shown in Fig. 3 that is enlarged about one pair of the sealant 20 and the concavity 17, a film 23 made of parylene coating is put on a surface of each sealant 20. The surface where the film 23 is put on is an area of the sealant 20, which the silicon oil S contacts with if there is not the film 23. The parylene coating as the film 23 is processed by a way that a film of poly-monochloro-para-xylylene (known as a trade name "Parylene") is evaporated by CVD (chemical vapor deposition) method so as to be approximately uniform thickness that is 3µm-5µm. It is possible that the sealant 20 exfoliates at a border B₁ with the connector housing 12 and a border B₂ with the contact protrusion 19a. As a result, clearances occur at the borders B₁, B₂. Therefore, it is preferable that the film 23 is also put on the borders B₁, B₂.

The pressure of the fluid is detected by the semiconductor pressure detection device 11 as follows. The pressure of the fluid that is introduced in to the pressure introduction aperture 13h is transmitted to the silicon oil S through the diaphragm 25. A diaphragm (not shown) of the semiconductor sensor chip 21 is deflected by the pressure of the silicon oil S. Electrical signal in proportion to the deflection is output via the bonding wire 22 and the terminal pin 19.

According to the above-described construction, the semiconductor pressure detection device 11 can achieve following advantages.
(1) Because each surface of the sealant 20 is coated with the film 23, the silicon oil S does not contact with the sealant 20. Therefore, the deterioration of the sealant 20 is significantly reduced, as a result, it is prevented that the silicon oil S leaks out through the clearances between the connector housing 12 and the terminal pins 19.
(2) The parylene coating as the film 23 is used in this embodiment. The parylene coating has abilities of oil resistance, permeability resistance for various fluids, electrical insulation, heat resistance, permeability for narrow clearance and low-temperature resistance. Further, porous in the film can not occur, and the strain caused during coating does not remain in sealant 20. Therefore, the parylene coating prevents the contact between the silicon oil S and the sealant 20. The electrical insulation of the film prevent a short-circuit of the terminal pins 19 and others.
(3) The dimethyl-silicon-oil is used as the pressure-transmission medium (the silicon oil S) and the dimethyl-silicon-rubber is used as the sealant 20. The reduction of cost can be achieved to use the dimethyl-silicon-oil, because the dimethyl-silicon-oil is cheaper than fluoro-silicon-oil that is conventionally used as the pressure-transmission medium. A combination of the dimethyl-silicon-oil and the dimethyl-silicon-rubber was conventionally avoided, because these molecular structures are similar, therefore swelling of the dimethyl-silicon-oil easily occur. However, this combination can be selected in the present invention, because the dimethyl-silicon-oil as the pressure-transmission medium does not contact with the dimethyl-silicon-rubber as the sealant 20.

Some modifications of the embodiment will be described hereinafter. It is possible that other kinds of film 23 instead of the parylene coating can be used, as long as the film has sealing ability. However, it is preferably that the film further has abilities of oil resistance, chemical resistance, permeability resistance for fluid, not making other components (the sensor chip 21, the sealant 20 and the connector housing 12) deteriorate, and a strong tensile strength. More preferably, the film has abilities of affinity to the other components, electrical insulation, and easiness of making a thin coating.

The film 23 is put on the surface of the sealant 20 which the silicon oil S contacts with if there is not the film 23, and additionally on the clearances that occurred at the borders B₁, B₂ in the embodiment. Further, it is preferable that the film 23 is put on surfaces of the bonding wires 22, surfaces of the connector housing 12 and surfaces of contact protrusions 19a, which these surfaces contact with the silicon oil S if there is not the film 23 as shown in Fig. 4.

The film 23 is approximately uniform thickness that is 3□m-5□min the embodiment. However the thickness of the film 23 can be modified, as long as the sealing ability is not lost. Further, it is possible that the thickness of the film 23 is not uniform, for example, the films 23 of the surface of the sealant 20 and the clearances that occurred at the borders B₁, B₂ are made thickly, and the films 23 of the surfaces of the bonding wires 22, connector housing 12 and contact protrusions 19a are made thinly. On the other hand, it is possible that only the films 23 of the surface of the sealant 20 are made thickly, and others, i.e. the films 23 of the clearances that occurred at the borders B₁, B₂, the surfaces of the bonding wires 22, connector housing 12 and contact protrusions 19a, are made thinly. In other words, these mean that the surfaces where the sealing necessity is serious are made thickly, and others are made thinly.

The parylene coating as the film 23 is made so that poly-monochloro-para-xylylene is evaporated by CVD method in the embodiment. However, other materials, for example poly-para-xylylene or poly-dichloro-para-xylylene, are acceptable, and other coating methods are useable.

The silicon oil S is used as the pressure-transmission medium in the embodiment. However, other mediums, for example perfluoro polyether (fluorine oil), are acceptable. In a case that the perfluoro polyether is used, the accuracy of detection is improved because the volume changes of the perfluoro polyether that occur due to temperature variations are less than the same of the silicon oil.

The pressure detection device that has three terminal pins is described in the embodiment. However, it will be clear that the present invention can be adapted to pressure detection devices that has two or more than three terminal pins.

Obviously, numerous modifications and variations of the present invention are possible in light of the above teachings. It is thereby to be understood that within the scope of the appended claims, the present invention may be practiced otherwise than as specifically described herein.

A pressure detection device for detecting pressure of fluid that comprises a housing, a pressure-transmission medium, a sensor chip, at least one terminal pin, a sealant and a film. The pressure of the fluid is transmitted to the pressure-transmission medium such as silicone oil, and the sensor chip detects the pressure of the pressure-transmission medium. The terminal pin for the electrical connection between the sensor chip and an outside device is fixed into the housing, and a contact protrusion that is exposed in the housing for being electrically connected with the sensor chip is formed at one end of the terminal pin. The sealant such as poly-monochloro-para-xylylene is put around the contact protrusion for sealing the pressure-transmission medium. The film such as poly-monochloro-para-xylylene for avoiding the contact between the pressure-transmission medium and the sealant is coating the sealant.

## Claims

1. A pressure detection device for detecting pressure of fluid, comprising:
a housing;
a pressure-transmission medium which pressure of the fluid is transmitted thereto;
a sensor chip disposed in the housing to detect the pressure of the pressure-transmission medium;
at least one terminal pin fixed into the housing, wherein a contact protrusion which is exposed in the housing for being electrically connected with the sensor chip is formed at one end thereof;
a sealant put around the contact protrusion for sealing the pressure-transmission medium; and
a film coating the sealant.

2. A pressure detection device for detecting pressure of fluid according to claim 1, wherein:
the housing comprises a concavity in which the pressure-transmission medium is filled and the contact protrusion is exposed; and
the film further coats the border between the sealant and the surface of the concavity, and the border between the sealant and the contact protrusion.

3. A pressure detection device for detecting pressure of fluid according to claim 2, comprising:
a bonding wire electrically connecting the sensor chip and the contact protrusion; wherein
the film further coats the surface of the concavity, the surface of the contact protrusion and the surface of the bonding wire.

4. A pressure detection device for detecting pressure of fluid according to claim 1, wherein the film is approximately uniform thickness that is 3 µm to 5 µm.

5. A pressure detection device for detecting pressure of fluid according to claim 2, wherein the thickness of the film coating the sealant is thicker than the same coating the borders.

6. A pressure detection device for detecting pressure of fluid according to claim 3, wherein the thickness of the film coating the sealant is thicker than the same coating the surface of the concavity, the surface of the contact protrusion and the surface of the bonding wire.

7. A pressure detection device for detecting pressure of fluid according to claim 1, wherein the film is made of one of poly-monochloro-para-xylylene, poly-para-xylylene or poly-dichloro-para-xylylene.

8. A pressure detection device for detecting pressure of fluid according to claim 7, wherein the film is made by chemical vapor deposition method.

9. A pressure detection device for detecting pressure of fluid according to claim 1, wherein the pressure-transmission medium is one of silicone oil and perfluoro polyether.

10. A pressure detection device for detecting pressure of fluid according to claim 1, wherein:
the pressure-transmission medium is dimethyl-silicon-oil; and
the sealant is dimethyl-silicon-rubber.

11. A pressure detection device for detecting pressure of fluid, comprising:
a housing;
a pressure-transmission medium which pressure of the fluid is transmitted thereto;
a sensor chip disposed in the housing to detect the pressure of the pressure-transmission medium;
at least one terminal pin fixed into the housing, wherein a contact protrusion which is exposed in the housing for being electrically connected with the sensor chip is formed at one end thereof;
a sealant means for avoiding the leak of the pressure-transmission medium; and
a film means for avoiding that the pressure-transmission medium contacts with the sealant means.
